# EUROPÄISCHE PATENTSCHRIFT

(11) **EP 1 807 358 B1**
(45) Veröffentlichungstag und Bekanntmachung des Hinweises auf die Patenterteilung: **11.01.2012**
(21) Anmeldenummer: 05812867.9
(22) Anmeldetag: 26.09.2005
(51) Int. Cl.: C02F 1/50

(54) **FADENSYSTEM ZUR INSTALLATION IN TRINKWASSERSYSTEMEN UND ANDEREN FLÜSSIGKEIT FÜHRENDEN SYSTEMEN**
THREAD SYSTEM FOR INSTALLING IN DRINKING WATER SYSTEMS AND OTHER LIQUID-GUIDING SYSTEMS
SYSTEME DE FILS DESTINE A ETRE INSTALLE DANS DES SYSTEMES D'EAU POTABLE ET D'AUTRES SYSTEMES DE CONDUITE D'EAU

(30) Priorität: 27.09.2004 DE 202004015240 U
(43) Veröffentlichungstag der Anmeldung: 18.07.2007
(73) Patentinhaber: Silvertex AG, 3627 Heimberg (CH)
(72) Erfinder: Militz, Detlef, 15366 Dahlwitz-Hoppegarten (DE)
(74) Vertreter: Reininger, Jan Christian
(86) Internationale Anmeldenummer: PCT/DE2005/001730
(87) Internationale Veröffentlichungsnummer: WO 2006/034701

(56) Entgegenhaltungen:
- EP-A- 1 134 012
- DE-A1- 4 416 501
- GB-A- 1 419 780
- GB-A- 1 449 239

## Beschreibung

Die Erfindung betrifft ein Fadensystem zur Installation in Trinkwassersystemen und anderen Flüssigkeit führenden Systemen gemäß dem Oberbegriff des Anspruchs 1.

Die EU-Richtlinie 98/83 definiert Trinkwasser als alles Wasser, das
- als Lebensmittel Verwendung findet,
- zum Zwecke der Körperreinigung dient,
- zur Reinigung von Gegenständen, die mit Lebensmitteln in Berührung kommen oder die bestimmungsgemäß nicht nur vorübergehend mit dem menschlichen Körper in Kontakt kommen, genutzt wird.

Unter Trinkwassersystemen und anderen Flüssigkeit führenden Systemen werden im Rahmen dieser Erfindung sämtliche Systeme verstanden, die mit Trinkwasser nach Definition der EU-Richtlinie 98/83 oder mit entsprechend anderen Flüssigkeiten in Kontakt kommen.

Nach den Vorschriften des deutschen Infektionsschutzgesetzes (IfSG) muss Trinkwasser so beschaffen sein, dass durch den Gebrauch von Trinkwasser eine Schädigung der menschlichen Gesundheit, insbesondere durch Krankheitserreger, nicht verursacht wird.

Das Wasser muss sowohl chemischen als auch mikrobiologischen Richt- bzw. Grenzwerten zur Trinkwasserqualität genügen. So dürfen nach TrinkwV keine Krankheitserreger in Konzentrationen enthalten sein, die zu einer Schädigung der menschlichen Gesundheit führen können. In 100 ml dürfen z. B. keine Kolibakterien (Escherichia coli), Enterokokken (Enterococcae) oder coliforme Bakterien nachgewiesen werden. Für Legionellen (Legionellae beispielsweise Legionella pneumophila) gilt in Deutschland die Übereinkunft, ab 100 koloniebildenden Einheiten (KbE) pro 100 ml Wasser Sanierungsmaßnahmen durchzuführen.

Da sich die Einhaltung der Parameter auf 100 ml Wasser beziehen, können in größeren Mengen Trinkwasser sehr wohl einige Bakterien vorkommen, d. h. selbst beim Einspeisen von mikrobiologisch einwandfreiem Trinkwasser in die Gebäudeinstallation seitens der Wasserversorger (Wasserwerke) können bei geeigneten Bedingungen bakterielle Krankheitserreger, auch Legionellen, wachsen und gedeihen.

Daraus ergibt sich die enorme Eigenverantwortung jedes Gebäude- bzw. Anlagenbetreibers für die Wasserqualität.

Die Warmwasserversorgung wirft für die Einhaltung der mikrobiologischen Parameter besondere Probleme auf, da Warmwasser sich im Temperaturbereich der idealen Vermehrungsbedingungen (bei Legionellen 35 bis 45°C) humanpathogener Bakterien befinden.

Besonders kritisch sind Teile des Rohrleitungssystems, in denen das Wasser zum Teil länger steht, wie Entnahmestellen (Wasserhähne, Dusch- bzw. Brauseköpfe), da hier Biofilme entstehen können, die das Wachstum von Bakterien stark fördern.

Während alle erwähnten Krankheitserreger zu einer gesundheitlichen Beeinträchtigung führen, sind Legionellen als besonders gefährlich einzustufen.

Die durch Legionellen verursachte Legionärskrankheit (Legionellose) führt häufig zu schweren Behinderungen (Invalidität) und endet zum Teil tödlich und unterliegt in Deutschland seit Januar 2001 einer ärztlichen Meldepflicht. Die Symptome der Legionärskrankheit ähneln stark denen einer gewöhnlichen Lungenentzündung, was die auf einer Früherkennung basierenden, nur im Anfangsstadium mögliche, Chance einer erfolgreichen Behandlung minimiert.

Die Infektion mit Legionellen erfolgt hauptsächlich durch das Einatmen feiner Lufttröpfchen (Aerosolen), beispielsweise an Dusch- bzw. Brauseköpfen, aber auch durch beispielsweise an Wasserentnahmestellen durch Spritzwasser entstehende Lufttröpfchen.

Die wichtigsten herkömmlichen Desinfektionsmethoden sind:
- thermische Desinfektion, (Die thermische Desinfektion ist zum einen äußerst kostenungünstig und zum anderen wäre bei einer Warmwassertemperatur von mindestens 70 °C an den Entnahmestellen das Risiko einer schweren Verbrühung zu hoch.);
- chemische Desinfektion bzw. elektrolytische Desinfektion mit Chlor, Hypochlorit bzw. unterchloriger Säure, (Die chemische Desinfektion mit Chlor, Hypochlorit bzw. unterchloriger Säure ist in ihrer Anwendung grundsätzlich gefährlich und hinterlässt z. T. giftige Rückstände, so dass die an den Entnahmestellen geforderte Trinkwasserqualität nicht gewährleistet wäre.) und
- bestrahlende Desinfektion (z. B. mit UV-Licht, Ultraschall oder Mikrowellen), Die bestrahlende Desinfektion ist direkt an den Entnahmestellen nur schwer praktisch durchführbar und wäre dann auch zu teuer und ließe direkt an den Entnahmestellen keine kontinuierliche Desinfektion zu.

Keines dieser Verfahren ist bisher in der Lage, ausreichend, effektiv und mit geringen Unterhaltskosten eine Freiheit von pathogenen Bakterien zu gewährleisten. Die aktuellste Publikation dazu wurde im deutschen Bundesbaublatt BBB 3-2005 veröffentlicht, wo über einen Langzeitversuch vier verschiedene Musteranlagen zur Wasserdesinfizierung untersucht wurden.

Besonders begünstigt wird die Entwicklung von Legionellenkulturen bei hohen Stagnationszeiten in installierten Rohrsystemen.

Immer wieder auftretende Fälle von Legionelleninfektionen insbesondere in öffentlichen Einrichtungen (Krankenhäuser) zeigen, dass die bisher entwickelten und in Anwendung befindlichen Methoden und Sicherungssysteme nicht in jedem Falle den Anforderungen genügen.

Beispielsweise die DE 44 16 501 A1 beschreibt ein Fadensystem mit einer aus mindestens einem Faden gebildeten mehrdimensionalen Struktur, wobei der Faden in feuchter Umgebung eine durch oligodynamische Metallanteile des Fadens verursachte keimtötende Aktivität aufweist. Dieses Fadensystem beispielsweise in Form eines aus versilberten Edelstahldrähten gebildeten Gewebes erfüllt sowohl die Funktion eines mechanischen Siebes als auch die Funktion eines keimtötenden Mittels durch die Abgabe von Silberionen an das vorbeiströmende Wasser.

Das Fadensystem wird üblicherweise quer zur Strömungsrichtung im Trinkwasserstrom fixiert, um die Filterfunktion auszuüben. Die dabei abgegebenen Silberionen reichen oftmals nicht aus, um stromabwärts gelegene Keime, die sich insbesondere in Kolonien auf Biofilmen befinden, abzutöten. Außerdem muss die Querschnittsfläche des Fadensystems der durchströmten Querschnittsfläche angepasst werden. Bei der großen Zahl der in der Praxis auftretenden unterschiedlichen Querschnittsflächen muss jeweils ein Maßschneidern des Fadensystems vorgenommen werden.

Der vorliegenden Erfindung liegt somit die Aufgabe zu Grunde, ein Fadensystem zur Installation in Trinkwasser und anderen Flüssigkeit führenden Systemen zu schaffen, das eine hohe Wirksamkeit gegenüber in Biofilmen auftretenden Keimen gewährleistet, gleichzeitig möglichst universell einsetzbar und preisgünstig herstellbar ist.

Diese Aufgabe wird durch ein Fadensystem mit den Merkmalen des Anspruchs 1 gelöst.

Erfindungsgemäß ist vorgesehen, dass das Fadensystem ein erstes Flächengebilde aufweist und sich eine Vielzahl von Abstand-Fadenelementen quer zum Flächengebilde derart erstrecken, dass das Fadensystem eine elastisch verformbare dreidimensionale Abstandsstruktur bildet, wobei der Faden mit der keimtötenden Aktivität im Flächengebilde und/oder im Bereich der Abstand-Fadenelemente angeordnet ist.

Das Merkmal "quer" zum Flächengebilde umfasst sämtliche Winkelstellungen zwischen Flächengebilde und den Abstand-Fadenelementen im gesamten Bereich zwischen 0° und 180°. Außerdem ist selbstverständlich, dass die Abstand-Fadenelemente nicht zwingend geradlinig sondern auch geschwungen und verschlungen verlaufen können. Weiterhin ist es unerheblich, wenn die Abstand-Fadenelemente nur abschnittsweise quer im Sinne der vorangehenden Definition verlaufen und andere Abschnitte in der Ebene des Flächengebildes angeordnet sind.

Zum einen ist denkbar, dass Flächengebilde und Abstand-Fadenelemente aus ein und demselben Faden gebildet sind. Diese Variante lässt sich in einem geeigneten Endlosverfahren herstellen. Ebenso ist es möglich, die Abstand-Fadenelemente aus einem anderen Faden als dem das Flächengebilde bildenden Faden herzustellen.

Im Rahmen der Erfindung ist somit zum einen vorgesehen, das Fadensystem ausschließlich aus dem Faden mit keimtötender Aktivität oder zum anderen auch als Kombination mindestens eines Fadens keimtötender Aktivität mit mindestens einem Faden ohne keimtötende Aktivität auszubilden. Dabei sind die jeweiligen Fäden im Flächengebilde und/oder im benachbart dazu liegenden Bereich der Abstand-Fadenelemente angeordnet bzw. das Flächengebilde und/oder die Abstand-Fadenelemente sind, zumindest teilweise, aus den jeweiligen Fäden gebildet.

Als Abstand-Fadenelement werden hier im einfachsten Fall Fadenabschnitte verstanden, die die nötige Elastizität aufweisen, damit das Fadensystem die gewünschten Eigenschaften aufweist.

Alternativ ist ebenso denkbar, dass auch das Abstand-Fadenelement ein eigenes Abstand-Fadensystem bildet. Das heißt, das Abstand-Fadenelement ist selbst als ein mindestens einen Faden umfassendes Gestrick-, Gewebe-, Gewirke-, Gelege- oder Geflechtelement aufgebaut.

Selbstverständlich umfasst das erfindungsgemäße Fadensystem auch die Ausführungsvarianten, die aus einer Mehrzahl von Fäden bestehen. Quer zum Flächengebilde orientierte Abstand-Fadenelemente bilden eine dreidimensionale Abstandsstruktur des Fadensystems.

Das Merkmal der elastischen Verformbarkeit ist hier so zu verstehen, dass das Fadensystem im Verhältnis zu seinen Ausmaßen quer und insbesondere senkrecht zum Flächengebilde eine deutliche Komprimierbarkeit aufweist. Nach einer Verformung durch Krafteinwirkung ist das Fadensystem aufgrund der Materialeigenschaften der verformten Abstand-Fadenelemente bestrebt, den unverformten Zustand weitgehend wieder anzunehmen.

Die beschriebenen Elastizitätseigenschaften erlauben es, ein und dasselbe Fadensystem bei einer Vielzahl unterschiedlicher Trinkwassersysteme und anderer Flüssigkeit führender Systeme einzusetzen. Eine Volumeneinheit des Fadensystems, die größer ist als das im Montagebereich des Trinkwassersystems vorhandene Raumvolumen, wird komprimiert in den Montagebereich eingebracht. Dort lässt man das Fadensystem expandieren, und es klemmt sich mit dem Flächengebilde und den Abstand-Faserabschnitten an die das Raumvolumen begrenzenden Wandungsabschnitte des Trinkwassersystems.

Auf diese Weise lassen sich insbesondere die besonders gefährdeten Stagnationsbereiche in Trinkwasser- und anderen Flüssigkeit führenden Systemen entlang ihrer gesamten Erstreckungslänge mit dem Fadensystem ausrüsten.

Dabei ist es insbesondere von Vorteil, dass sich das Fadensystem auf Grund seiner Elastizitätseigenschaften gegen die Wandungsabschnitte der Stagnationsbereiche presst. Das Fadensystem kommt somit über sein Flächengebilde und/oder seine Abstand-Fadenelemente in direkten Kontakt mit den besonders hier auftretenden kritischen Biofilmen.

Außerdem ist das erfindungsgemäße Fadensystem problemlos für unterschiedliche Größen konfektionierbar. Dazu lassen sich eine Mehrzahl von Fadensystemen zu einem gekoppelten Fadensystem miteinander verbinden. Dies geschieht beispielsweise durch Vernähen, Verkleben, Verschweißen oder Verhaken der einzelnen Fadensysteme. Die Funktionalität des gekoppelten Fadensystems entspricht dann immer noch dem der einzelnen Fadensysteme.

Es ist selbstverständlich, dass das gesamte Fadensystem insbesondere die benötigten Elastizitäts-Eigenschaften über den gesamten auftretenden Temperaturbereich des Trinkwassers in Trinkwasser- und andere flüssigkeitsführende Systeme von zirka 0° bis 100°C aufweisen muss. Dementsprechend sind die Werkstoffe ausgewählt.

Oligodynamische Metalle sind dem hier einschlägigen Fachmann bekannt. Dabei handelt es sich um Halbedel- und Edelmetalle wie beispielsweise Gold, Silber und Kupfer. Jedoch weisen auch Zink und Nickel eine entsprechende Aktivität auf. Die Metallanteile können dabei entweder in metallischer Form als in die Fadenstruktur eingebundene Partikel oder am Faden angeordnete Schichten vorgesehen sein. Ebenso ist denkbar, die Metallanteile in geeigneter ionischer Form, beispielsweise als Salze der genannten Metalle im oder am Faden vorzusehen.

Die oligodynamische, keimtötende Aktivität des Fadensystems wird auch durch eine Kontaktreaktion von Bakterien an der Oberfläche des Fadens mit der keimtötenden Aktivität gewährleistet. Das heißt, neben der vorangehend beschriebenen Wirkung der in das Wasser freigegebenen Metallionen tragen die nicht in Lösung gehenden, an der Fadenoberfläche vorliegenden Metallatome bzw. Metallionen - bei dem Einsatz schwer wasserlöslicher Metallsalze - zum gesamten oligodynamischen Effekt des in einem Trinkwassersystem eingebrachten Fadensystems bei.

Damit der Durchsatz des Trinkwassers nur wenig behindert wird, ist es von Vorteil, dass der Abstand zwischen benachbarten Abstand-Fadenelementen des Fadensystems durchschnittlich größer als 1 mm ist. Je nach Einsatzbereich kann die "freie" Weglänge zwischen den Abstand-Fadenelementen variabel ausgestaltet werden. Selbstverständlich hängt der Strömungswiderstand von der Strömungsgeschwindigkeit ab, so dass bei sehr hohen Strömungsgeschwindigkeiten Abstände zwischen Abstand-Fadenelementen von deutlich über einem Millimeter erforderlich werden.

Im Hinblick auf die Komprimierbarkeit sind die Abstand-Fadenelemente bevorzugt derart ausgebildet, dass sich das Fadensystem in einer Richtung quer zum ersten Flächengebilde um mindestens 20 % seiner Querausdehnung komprimieren lässt. Das Maß der möglichen Kompression hängt zum einen von den Rückstellkräften der komprimierten Abstand-Fadenelemente ab. Andererseits kann aber auch eine zu starke Kompression im Hinblick auf den ansteigenden Strömungswiderstand des komprimierten Fadensystems unerwünscht sein.

Die Flächengebilde sind in aus dem Stand der Technik bekannter Weise insbesondere als Geflecht, Gelege, Gestrick, Gewebe, Gewirke oder als Faserflockelemente ausgebildet. Das Flächengebilde erlaubt es durch seine Struktur eine Oberfläche zu erkennen, zu der sich Abstand-Fadenelemente quer erstrecken und somit zusammen mit dem Flächengebilde eine elastisch verformbare dreidimensionale Abstandsstruktur bilden. Das heißt nicht, dass das Flächengebilde rein zweidimensional ausgebildet ist. Dies wäre auch realitätsfremd, da ein textiles Flächengebilde aufgrund seines Aufbaus quer zu seiner Erstreckungsfläche immer eine gewisse Ausdehnung aufweisen muss.

Unter einem Geflecht wird ein Flächengebilde verstanden, das durch Kreuzen gegenläufig diagonal verlaufender Flecht-Fadensysteme entsteht, wobei sich die Flechtfäden in einem einstellbaren Winkel zur Warenkante verkreuzen.

Ein Gelege wird als Flächengebilde aus einem oder mehreren gestreckten, übereinander liegenden Fadensystemen verschiedener Orientierungsrichtungen ohne oder mit Fixierung der Kreuzungspunkte verstanden.

Ein Gestrick ist ein Flächengebilde, bei dem die Maschen aus einem horizontal vorgelegten Faden einzeln und nacheinander gebildet werden. Zusätzlich können in Kett-und/oder Schussrichtung zur Verstärkung weitere Fadensysteme eingebunden sein.

Als Gewebe gilt ein Flächengebilde, das mindestens zwei sich in der Regel rechtwinklig kreuzende Fadensysteme enthält, wobei ein Fadensystem parallel zur Kante verläuft.

Als Gewirke gilt ein Flächengebilde, das aus einem oder mehreren Fadensystemen durch gleichzeitiges Bilden von Maschen in Längsrichtung gebildet wird. Zusätzlich können in Kett- und/oder Schussrichtung zur Verstärkung weitere Fadensysteme eingebunden sein.

Als Faserflockelemente werden Flächengebilde verstanden, bei denen ein flächiges Substrat elektrostatisch aufgeladen wird, um Fasern einer definierten, geschnittenen Länge gleichmäßig oder in beabsichtigter systematischer oder zufälliger Rasterstruktur darauf anzuordnen und dauerhaft zu fixieren.

Mit den vorangehend genannten Flächengebilden können die Abstand-Fadenelemente verwoben, verstrickt, verklebt oder vernäht sein. Dabei können die Abstand-Fadenelemente entweder in Form eines separaten Fadens vorliegen oder als ein Faden ausgebildet sein, der im Flächengebilde mit angeordnet ist.

Eine bevorzugte Ausführungsform des Fadensystems sieht vor, dass das Fadensystem ein im Wesentlichen parallel zum ersten Flächengebilde orientiertes zweites Flächengebilde aufweist, wobei die Abstand-Fadenelemente das erste und das zweite Flächengebilde voneinander beabstanden.

Es existieren Technologien des Webens und der Maschenwarenherstellung, womit die gesamte räumliche Struktur eines Fadensystems mit zwei benachbarten Flächengebilden in einem Arbeitsprozess beispielsweise als Abstandsgewebe oder Abstandsgewirke produktiv herstellbar sind. Dabei kann sowohl ein einziger als auch eine Kombination verschiedener Fäden zum Einsatz kommen. Im Rahmen der Erfindung muss mindestens ein Faden die erforderliche keimtötende Aktivität aufweisen.

Das zweite Flächengebilde kann, wie vorangehend ausgeführt, ebenfalls insbesondere als Geflecht, Gelege, Gestrick, Gewebe, Gewirke oder Faserflockelement ausgebildet sein.

Die Kopplung der Abstand-Fadenelemente mit dem zweiten Flächengebilde lässt sich entsprechend der vorangehend beschriebenen Kopplung zum ersten Flächengebilde realisieren.

Eine Variante des Fadensystems besteht darin, das komplette Fadensystem aus ein und demselben Faden herzustellen. Dies setzt jedoch voraus, dass der einzige Faden die nötigen Elastizitätseigenschaften zur Beabstandung der beiden Flächengebilde und eine geeignete keimtötende Aktivität aufweist.

Ebenso ist denkbar, dass die beiden Flächengebilde aus einem gleichen ersten Faden und die Abstand-Fadenelemente aus einem zweiten Faden hergestellt werden. Dabei lassen sich der erste und/oder der zweite Faden mit der keimtötenden Aktivität ausstatten.

Für sämtliche vorangehend beschriebenen Varianten des Fadensystems gilt, dass der mindestens eine Faden oder einer der Fäden ein multifiles oder ein monofiles textiles, metallisiertes Garn aufweist.

Alternativ oder ergänzend ist es möglich, dass der eine Faden oder einer der Fäden als metallischer Faden ausgebildet ist. Als metallischer Faden werden hier feine Drähte, vorzugsweise aus Edelstahl angesehen, d. h. ein metallischer Faden besteht vollständig aus Metall. Ebenso ist jedoch denkbar, eine Glas-, Basalt- oder Kohlefaser mit geeigneten Eigenschaften im Hinblick auf Elastizität und/oder keimtötende Aktivität einzusetzen.

Weiterhin ist es vorteilhaft, das Fadensystem mit Fixiermittel zum Befestigen des Fadensystems in einem Trinkwassersystem auszubilden. Fixiermittel im Sinne dieser Ausführungsform sind sämtliche aus dem Stand der Technik bekannten Systeme, die sich zur Fixierung eignen: Klemmen, Kleben, Haken, Klettverschlüsse, Rasten, Schrauben usw.

Abschließend sei im Hinblick auf den beanspruchten Schutzbereich betont, dass ein Fadensystem mit den Merkmalen des Anspruchs 1 beansprucht wird, das sich aus rein konstruktionstechnischen Erwägungen heraus für die Installation in Trinkwassersystemen und anderen Flüssigkeit führenden Systemen gemäß der in der Beschreibungseinleitung gegebenen Definition eignet. Eine Beschränkung des Schutzbereichs durch die Anforderung der zulassungsrechtlichen Eignung in juristischer Hinsicht aus der Perspektive der vielen verschiedenen nationalen Trinkwasservorschriften darf hier nicht hineininterpretiert werden.

Weitere Vorteile und Merkmale der Erfindung werden im Zusammenhang mit den in den nachfolgenden Zeichnungen dargestellten und beschriebenen Ausführungsvarianten verdeutlicht.

Es zeigt:
- Figur 1a: den schematischen Querschnitt einer ersten Ausführungsform des Fadensystems als Abstandsstruktur zweier Flächengebilde mit geraden, senkrecht orientierten Abstand-Fadenelementen;
- Figur 1b: die Querschnittsansicht der Ausführungsform gemäß Figur 1a mit der Variante schräg orientierter Abstand-Fadenelemente;
- Figur 1c: die Querschnittsansicht der Ausführungsform gemäß Figur 1a mit der Variante gekreuzter schräg orientierter Abstand-Fadenelemente;
- Figur 1d: den schematischen Querschnitt einer zweiten Ausführungsform des Fadensystems als Abstandsstruktur umfassend ein Flächengebilde und quer zum Flächengebilde orientierte maschenartige Abstand-Fadenelemente;
- Figur 1e: die Querschnittsansicht der Ausführungsform gemäß Figur 1d mit der Variante im Wesentlichen senkrecht zum Flächengebilde angeordneter borstenartiger Abstand-Fadenelemente;
- Figur 1f: den schematischen Querschnitt eines Trinkwassersystems in Form eines Duschkopfes mit einem darin angeordneten Fadensystem gemäß Figur 1e;
- Figur 1g: den schematischen Querschnitt eines Duschkopfes mit einem darin angeordneten Fadensystem gemäß Figur 1 e, wobei das Fadensystem mittels Fixiermitteln in Form mechanischer Klemmvorrichtungen am Duschkopf befestigt ist und
- Figur 2: eine dritte Ausführungsform des Fadensystems als Abstandsstruktur zweier Flächengebilde in modularem Aufbau.

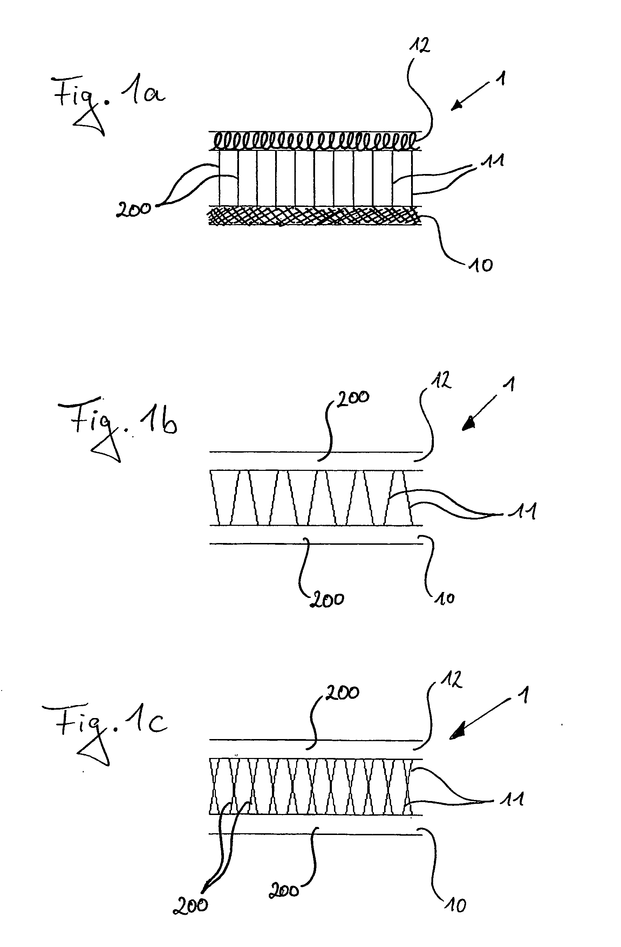

Figur 1a zeigt den schematischen Querschnitt einer ersten Ausführungsform des Fadensystems 1 als Abstandsstruktur eines ersten Flächengebildes 10 und eines zweiten Flächengebildes 12. Das erste Flächengebilde 10 ist schematisch in Form eines Geleges aus einer Vielzahl von Fasern dargestellt. Die gezeigten Maschen des zweiten Flächengebildes 12 sollen schematisch ein als Gestrick ausgebildetes zweites Flächengebilde 12 darstellen. Grundsätzlich sind für die Ausbildung der Flächengebilde 10, 12 jeweils Gelege, Gestricke, Gewebe und Gewirke in all ihren aus dem Stand der Technik bekannten Varianten denkbar. Um die schematischen Darstellungen zu vereinfachen, sind die Flächengebilde 10, 12 der Varianten und Ausführungsformen in den übrigen Figuren ohne die Details der darin angeordneten Fäden rein schematisch dargestellt.

Die beiden Flächengebilde 10, 12 sind über Abstand-Fadenelemente 11 beabstandet. Diese erstrecken sich bei dieser Variante des Fadensystems 1 rechtwinklig zur Erstreckungsebene der beiden Flächengebilde 10, 12. Es ist selbstverständlich, dass zumindest die Werkstoffeigenschaften der Abstand-Fadenelemente 11 derart sein müssen, dass ein Verscheren bzw. ein Komprimieren der Abstandsstruktur möglich ist. Dabei verbiegen sich die Abstand-Fadenelemente 11 im Wesentlichen parallel zueinander nach rechts oder links bzw. die ursprünglich gestreckten Abstand-Fadenelemente 11 werden durch die Verformung in eine gekrümmte Form gebracht. Dabei nähert sich das erste Flächengebilde 10 dem zweiten Flächengebilde 12. Die Verformungsenergie ist im Idealfalle vollständig als potentielle Energie der verbogenen Abstand-Fadenelemente 11 in der Abstandsstruktur gespeichert und wieder abrufbar. Selbstverständlich sind eine Vielzahl weiterer -hier nicht gezeigter - Winkelstellungen zwischen 0° und 180° im Hinblick auf die Anordnung der Abstand-Fadenelemente und der Flächengebilde möglich.

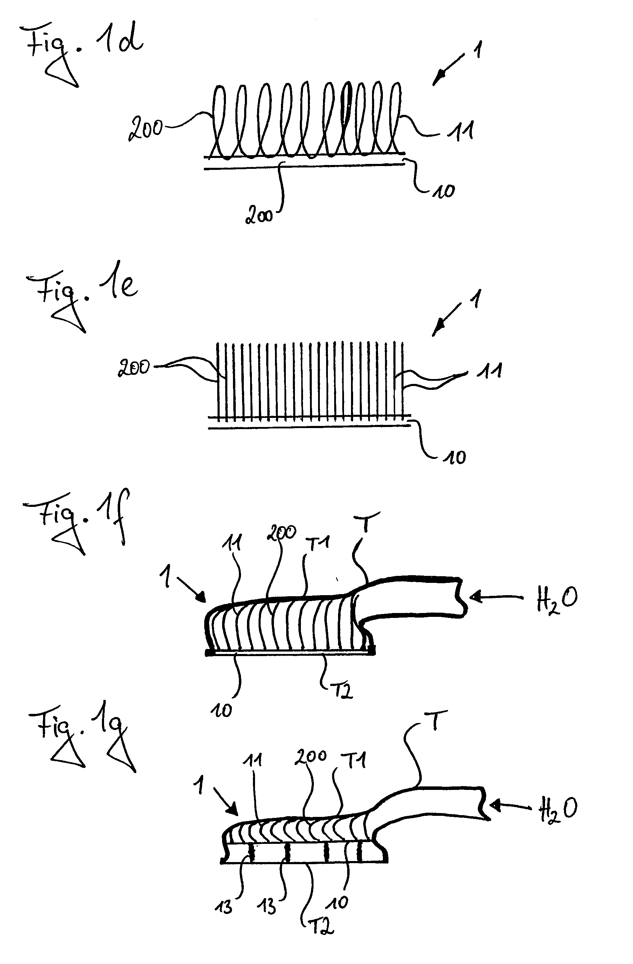

Die mehrdimensionale Struktur des Fadensystems 1 ist aus einer Vielzahl von Fäden gebildet. Mindestens einer ist als Faden 200 mit keimtötender Aktivität vorgesehen. Bei der in Figur 1 a gezeigten Variante des Fadensystems ist der Faden 200 mit keimtötender Aktivität im Bereich der Abstand-Fadenelemente 11 angeordnet. Dies kann zum einen so realisiert sein, dass der keimtötende Faden 200 neben seiner oligodynamischen Aktivität gleichzeitig die Funktion eines Abstand-Fadenelementes übernimmt. Ebenso ist möglich, dass neben einem Abstand-Fadenelement 11 mit den für die Abstandsstruktur erforderlichen Elastizitätseigenschaften der keimtötende Faden 200 angeordnet ist. Diese Anordnung kann beabstandet realisiert sein, oder das Abstand-Fadenelement 11 und der keimtötende Faden 200 werden gemeinsam in Form eines Garns oder eines Zwirns verarbeitet. Selbstverständlich ist es ebenso möglich alternativ oder kumulativ Faden mit keimtötenden Eigenschaften im Bereich der Flächengebilde 10, 12 anzuordnen. Diese Varianten werden im Zusammenhang mit den nachfolgenden Figuren beschrieben.

Es ist selbstverständlich, dass die geometrische Orientierung der Abstand-Fadenelemente 11 eine Vielzahl unterschiedlicher Varianten aufweisen kann. In den Figuren 1b und 1c sind zwei weitere Varianten in der der Figur 1a entsprechenden Querschnittsperspektive dargestellt.

Figur 1 b zeigt eine Anordnung, in der die Abstand-Fadenelemente 11 abweichend von einer senkrechten Orientierung leicht schräg mit einem Winkel größer 80° zwischen dem ersten Flächengebilde 10 und dem zweiten Flächengebilde 12 verlaufen. Hier ist der keimtötende Faden 200 ausschließlich in den beiden Flächengebilden 10, 12 vorgesehen.

Außerdem ist denkbar, dass die Abstand-Fadenelemente 11 geschwungen oder, wie in Figur 1 c gezeigt, einander kreuzend verlaufen. Wesentlich ist jeweils nur, dass unter Berücksichtigung der Gewichtskraft der Flächengebilde 10, 12 und der Materialeigenschaften der Abstand-Fadenelemente 11 die gewünschte Elastizität des Fadensystems 1 realisiert ist.

Außerdem hängt die Orientierung der Abstand-Fadenelemente 11 zwischen dem ersten Flächengebilde 10 und dem zweiten Flächengebilde 12 davon ab, wie die Verknüpfung zwischen Flächengebilden und den Abstand-Fadenelemente 11 hergestellt wurde. Dies kann insbesondere durch Verknüpfen, Verkleben, Verschweißen, Verstricken oder Verhaken geschehen.

Figur 1d zeigt eine zweite Ausführungsform des Fadensystems. Es ist ein einziges Flächengebilde 10 vorgesehen, für dessen Ausbildung die zu Figur 1a gemachten Ausführungen entsprechend gelten. Quer, in diesem Falle senkrecht oder nahezu senkrecht zur Erstreckungsebene des Flächengebildes 10 verlaufen Abstand-Fadenelemente 11 in maschenartiger Form. Diese Maschen weisen die entsprechenden elastischen Eigenschaften auf, so dass sich die dreidimensionale Abstandsstruktur durch eine Verformung der Maschen komprimieren lässt.

Entsprechendes gilt für die in Figur 1e gezeigte Variante der zweiten Ausführungsform des Fadensystems. Im Unterschied zu der ersten Variante aus Figur 1d sind die Abstands-Fadenelemente 11 in Form einzelner gestreckter Fadenabschnitte vorgesehen. Diese Fadenabschnitte verlaufen im Wesentlichen senkrecht zur Erstreckungsebene des Flächengebildes 10, so dass das Fadensystem 1 bürstenförmig ausgebildet ist.

Für beide Varianten der zweiten Ausführungsform des Fadensystems gilt entsprechend den Ausführungen zu Figur 1 a, dass der keimtötende Faden 200 im Flächengebilde 10 und/oder im Bereich der Abstands-Fadenelemente 11 vorgesehen sein kann. Die übrigen Ausführungen im Hinblick auf die Anordnung und Verarbeitung des keimtötenden Fadens 200 im Zusammenhang mit den Darstellungen aus den Figuren 1a bis 1 c gelten hier entsprechend.

Als rein beispielhaft zu verstehende Anwendung des Fadensystems gemäß Figur 1 eist in den Figuren 1f und 1e der Querschnitt eines Trinkwassersystems T in Form eines Duschkopfes schematisch dargestellt. Es ist zu erkennen, wie ein Fadensystem 1 im Innern des Duschkopfes angeordnet ist. Der sich zwischen den Wandungen T1 und der Wasseraustrittsplatte T2 erstreckende Hohlraum des Duschkopfes ist von Abstands-Fadenelementen 11 eines Fadensystems 1 durchsetzt. Das Flächengebilde 10 des Fadensystems 1 kommt dabei auf der Wasseraustrittsplatte T2 zu liegen und ist entsprechend grobmaschig ausgebildet, um dem durchtretenden Wasser hinreichend wenig Strömungswiderstand entgegenzusetzen. Der Abstand zwischen der Ebene des Flächengebildes 10 und der gegenüberliegenden Wandung T1 ist kleiner als die Länge der einzelnen Abstand-Fadenelemente 11. Dadurch lässt sich das Fadensystem 1 nur unter einer gewissen Kompression der Abstand-Fadenelemente 11 in den Duschkopf einbringen. Dadurch ist sichergestellt, dass sich die elastisch verformten Abstand-Fadenelemente 11 gegen die Wandung T1 des Duschkopfes drücken. Da die Abstand-Fadenelemente 11 mit einem keimtötendem Faden 200 ausgestattet sind, ist dadurch eine mikrobizide Wechselwirkung zwischen dem Fadensystem und einem sich insbesondere auf der Wandung T1 bildenden Biofilm gewährleistet.

Reicht das dreidimensionale Volumen des komprimierten Fadensystems 1 nicht aus, um einen von Wasser durchströmten Hohlraum eines Trinkwassersystems T auszufüllen, oder ist eine Fixierung des Fadensystems 1 in diesem Hohlraum sicherzustellen, so lässt sich dies durch Fixiermittel gewährleisten. Diese Fixiermittel können beispielsweise, wie in Figur 1 g gezeigt, in Form mechanischer Klemmvorrichtungen 13 ausgebildet sein. Diese sind -wie beispielhaft gezeigt - als Druckfedern ausgebildet, die den gewünschten Passsitz des Fadensystems 1 im Trinkwassersystem T gewährleisten.

Die Abstand-Fadenelemente 11 der bisher beschriebenen Ausführungsformen und ihrer Varianten können im simpelsten Fall als Abschnitte eines Fadens aus einem Garn oder einem Zwirn ausgebildet sein, die die benötigten Elastizitätseigenschaften aufweisen. Ebenso ist es jedoch denkbar, die Abstand-Fadenelemente 11 selbst als eigene Abstand-Fadensysteme auszubilden. Diese können als Gewebe-, Gestrick-, Gewirk-, Gelege- oder Geflecht-Elemente mit einem oder mehreren Fäden vorgesehen sein und entsprechen in ihrem Aufbau beispielsweise den in den Figuren 1a bis 1e gezeigten Varianten.

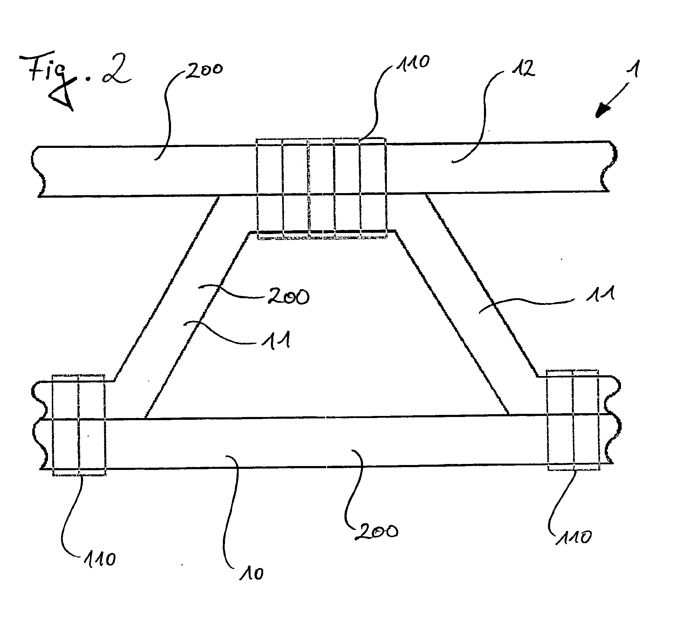

Ein solches Ausführungsbeispiel ist in Figur 2 als dritte Ausführungsform des Fadensystems 1 schematisch dargestellt. Das erste Flächengebilde 10 und das zweite Flächengebilde 12 sind hier durch trapezartig verlaufende Abstand-Fadenelemente 11 in Form eines vorangehend genannten Abstand-Fadensystems voneinander beabstandet. Die Verknüpfung der Abstand-Fadensysteme mit den beiden Flächengebilden 10, 12 erfolgt hier durch ein separates Vernähen mittels eines Nähfadens 110. Alternativ zum Vernähen wäre ebenso ein Verkleben oder Verschweißen denkbar.

Abschließend wird betont, dass die Anordnung des Fadens mit der keimtötenden Aktivität im Fadensystem unabhängig vom Aufbau des Fadensystems 1 ist.

Für jede der vorangehend beschriebenen Varianten kann der keimtötende Faden in den Flächengebilden und/oder im Bereich der Abstand-Fadenelemente angeordnet sein. Dazu ist es möglich, dass der keimtötende Faden zumindest teilweise Bestandteil der Struktur des Flächengebildes und/oder der Abstand-Fadenelemente ist. Der keimtötende Faden kann zu diesem Zweck in Form eines Garnes oder eines Zwirns die für die jeweilige Struktur notwendigen mechanisch-elastischen Eigenschaften aufweisen. Ebenso ist denkbar, dass der keimtötende Faden als eine von den Strukturen des Flächengebildes und der Abstand-Fadenelemente unabhängige Fadenstruktur in das Flächengebilde und/oder die Faden-Abstandelemente eingearbeitet ist.

Selbstverständlich sind Mischformen der vorangehend genannten Varianten vom Gegenstand der Erfindung mit umfasst.

## Patentansprüche

1. Fadensystem (1) zur Installation in Trinkwasser- und anderen Flüssigkeit führenden Systemen (T) mit
• einer aus mindestens einem Faden (200) gebildeten mehrdimensionalen Struktur, wobei der Faden (200) in feuchter Umgebung eine durch oligodynamische Metallanteile des Fadens verursachte keimtötende Aktivität aufweist,
**dadurch gekennzeichnet,**
**dass** das Fadensystem (1) ein erstes Flächengebilde (10) aufweist und sich eine Vielzahl von Abstand-Fadenelementen (11) quer zum Flächengebilde (10) derart erstrecken, dass das Fadensystem (1) eine elastisch verformbare dreidimensionale Abstandsstruktur bildet, wobei der Faden (200) mit der keimtötenden Aktivität im Flächengebilde (10) und/oder im Bereich der Abstand-Fadenelemente (11) angeordnet ist.

2. Fadensystem gemäß Anspruch 1, **dadurch gekennzeichnet, dass** der Abstand zwischen benachbarten Abstand-Fadenelementen (11) des Fadensystems (1) durchschnittlich größer als 1 mm ist.

3. Fadensystem gemäß Anspruch 1 oder 2, **dadurch gekennzeichnet, dass** die Abstand-Fadenelemente (11) derart ausgebildet sind, dass sich das Fadensystem (1) in einer Richtung quer zum ersten Flächengebilde (10) auf mindestens 20 % seiner Ausdehnung komprimieren lässt.

4. Fadensystem gemäß einem der Ansprüche 1 bis 3, **dadurch gekennzeichnet, dass** das erste Flächengebilde (10) als Geflecht, Gelege, Gestrick, Gewebe oder Gewirke ausgebildet ist.

5. Fadensystem gemäß einem der Ansprüche 1 bis 4, **dadurch gekennzeichnet, dass** das Fadensystem (1) ein im Wesentlichen parallel zum ersten Flächengebilde (10) orientiertes zweites Flächengebilde (12) aufweist, wobei die Abstand-Fadenelemente (11) das erste und das zweite Flächengebilde (10, 12) voneinander beabstanden.

6. Fadensystem gemäß Anspruch 5, **dadurch gekennzeichnet, dass** das zweite Flächengebilde (12) als Geflecht, Gelege, Gestrick, Gewebe oder Gewirke ausgebildet ist.

7. Fadensystem gemäß Anspruch 5 oder 6, **dadurch gekennzeichnet, dass** das gesamte Fadensystem (1) aus dem gleichen Faden (200) gebildet ist.

8. Fadensystem gemäß Anspruch 5 oder 6, **dadurch gekennzeichnet, dass** das erste und das zweite Flächengebilde (10, 12) aus einem ersten Faden und die Abstand-Fadenelemente (11) aus einem zweiten Faden gebildet sind, wobei der erste und/oder der zweite Faden eine keimtötende Aktivität aufweist.

9. Fadensystem gemäß einem der vorangehenden Ansprüche, **dadurch gekennzeichnet, dass** der mindestens eine Faden (200) mit keimtötender Aktivität ein multifiles oder ein monofiles textiles, metallisiertes Garn aufweist.

10. Fadensystem gemäß einem der Ansprüche 1 bis 8, **dadurch gekennzeichnet, dass** der mindestens eine Faden (200) mit keimtötender Aktivität als metallischer Faden ausgebildet ist.

11. Fadensystem gemäß einem der vorangehenden Ansprüche, **dadurch gekennzeichnet, dass** das Fadensystem (1) Fixiermittel (13) zum Befestigen des Fadensystems in einem Trinkwassersystem (T) aufweist.

12. Fadensystem gemäß Anspruch 11, **dadurch gekennzeichnet, dass** die Fixiermittel (13) als mechanische Klemmvorrichtung zum Fixieren des Fadensystems (1) gegen eine Strömungskraft des Trinkwassers im Trinkwassersystem (T) ausgebildet sind.

## Claims

1. A thread system (1) for installing in drinking water systems and other liquid-guiding systems (T), with a multidimensional structure, formed from at least one thread (200), the thread (200) having, in a moist environment, a germicidal activity caused by oligodynamic metal fractions of the thread, wherein
the thread system (1) has a first sheet-like structure (10) and a multiplicity of spacer thread elements (11) extend transversely with respect to the sheet-like structure (10) in such a way that the thread system (1) forms an elastically deformable three-dimensional spacer structure, the thread (200) with the germicidal activity being arranged in the sheet-like structure (10) and/or in the region of the spacer thread elements (11).

2. The thread system as claimed in claim 1, wherein the distance between adjacent spacer thread elements (11) of the thread system (1) is, on average, greater than 1 mm.

3. The thread system as claimed in claim 1, wherein the spacer thread elements (11) are designed in such a way that the thread system (1) can be compressed to at least 20% of its extent in a direction transverse to the first sheet-like structure (10).

4. The thread system as claimed in claim 1, wherein the first sheet-like structure (10) is designed as an interlacing, contexture or woven or knitted fabric.

5. The thread system as claimed in claim 1, wherein the thread system (1) has a second sheet-like structure (12) oriented essentially parallel to the first sheet-like structure (10), the spacer thread elements (11) spacing the first and the second sheet-like structure (10, 12) apart from one another.

6. The thread system as claimed in claim 5, wherein the second sheet-like structure (12) is designed as an interlacing, contexture or knitted or woven fabric.

7. The thread system as claimed in claim 5, wherein the entire thread system (1) is formed from the same thread (200).

8. The thread system as claimed in claim 5, wherein the first and the second sheet-like structure (10, 12) are formed from a first thread and the spacer thread elements (11) from a second thread, the first and/or the second thread having a germicidal activity.

9. The thread system as claimed in claim 1, wherein the at least one thread (200) with germicidal activity has a multifilament or monofilament textile metalized yarn.

10. The thread system as claimed in claim 1, wherein the at least one thread (200) with germicidal activity is designed as a metallic thread.

11. The thread system as claimed in claim 1, wherein the thread system (1) has fixing means (13) for fastening the thread system in a drinking water system (T).

12. The thread system as claimed in claim 11, wherein the fixing means (13) are designed as a mechanical clamping device for fixing the thread system (1) counter to a flow force of the drinking water in the drinking water system (T).

## Revendications

1. Système en fil (1) destiné à être installé dans des systèmes conducteurs d'eau potable et d'autres liquides (T) et comportant
• une structure multidimensionnelle formée d'au moins un fil (200), le fil (200) présentant dans un environnement humide une activité destructrice de germes due à des éléments métalliques oligodynamiques du fil,
**caractérisé en ce que**
le système en fil (1) présente un premier tissu (10) et qu'une multitude d'éléments en fils d'espacements (11) s'étendent transversalement par rapport au tissu (10) de manière à ce que le système en fil (1) constitue une structure d'espacement tridimensionnelle déformable élastiquement, le fil (200) ayant l'activité destructrice de germes étant disposé dans le tissu (10) et/ou au niveau des éléments en fil d'espacement (11).

2. Système en fil selon la revendication 1, **caractérisé en ce que** l'espace entre les éléments en fil d'espacement (11) du système en fil (1) est en moyenne supérieur à 1 mm.

3. Système en fil selon la revendication 1 ou 2, **caractérisé en ce que** les éléments en fil d'espacement (11) sont réalisés de manière à ce que le système en fil (1) se comprime à au moins 20 % de son étirement dans un sens transversal au premier tissu (10).

4. Système en fil selon une des revendications 1 à 3, **caractérisé en ce que** le premier tissu (10) se présente sous forme d'un tressage, d'un non-tissé, d'un tricotage, d'un tissage ou d'une maille.

5. Système en fil selon une des revendications 1 à 4, **caractérisé en ce que** le système en fil (1) présente un second tissu (12) orienté sensiblement parallèlement au premier tissu (10), les éléments en fil d'espacement (11) espaçant l'un de l'autre le premier et le second tissus (10, 12).

6. Système en fil selon la revendication 5, **caractérisé en ce que** le second tissu (12) se présente sous forme d'un tressage, d'un non-tissé, d'un tricotage, d'un tissage ou d'une maille.

7. Système en fil selon la revendication 5 ou 6, **caractérisé en ce que** l'ensemble du système en fil (1) est constitué du même fil (200).

8. Système en fil selon la revendication 5 ou 6, **caractérisé en ce que** le premier et le second tissus (10, 12) sont constitués d'un premier fil et les éléments en fil d'espacement (11) d'un second fil, le premier et/ou le second fil présentant une activité destructrice de germes.

9. Système en fil selon une des revendications précédentes, **caractérisé en ce que** l'au moins un fil (200) ayant une activité destructrice de germes comporte un fil textile métallisé multifilaments ou monofilament.

10. Système en fil selon une des revendications 1 à 8, **caractérisé en ce que** l'au moins un fil (200) ayant une activité destructrice de germes se présente sous forme d'un fil métallique.

11. Système en fil selon une des revendications précédentes, **caractérisé en ce que** le système en fil (1) présente des moyens de fixation (13) pour la fixation du système en fil dans un système d'eau potable (T).

12. Système en fil selon la revendication 11, **caractérisé en ce que** les moyens de fixation (13) sont réalisés sous forme d'un dispositif de serrage mécanique pour la fixation du système en fil (1) à l'encontre d'une force d'écoulement de l'eau potable dans le système d'eau potable (T).
